# EUROPEAN PATENT SPECIFICATION

(11) **EP 2 324 908 B1**
(45) Date of publication and mention of the grant of the patent: **14.01.2015**
(21) Application number: 10382278.9
(22) Date of filing: 25.10.2010
(51) Int. Cl.: B01F 3/12, B01F 3/20, B01F 5/22, B01F 13/10, A23K 1/00

(54) **Method, its use as well as apparatus for adding additives to feeds**
Verfahren, dessen Anwendung sowie Vorrichtung zur Zugabe von Additiven in Futtermittel
Procédé, son utilisation, et dispositif d'application des additifs pour fourrage

(30) Priority: 03.11.2009 ES 200902098
(43) Date of publication of application: 25.05.2011
(73) Proprietor: MANGRA, S.A., 08560 Manlleu (ES)
(72) Inventor: Mallarach Capdevila, Juan, 08560 Manlleu (ES)
(74) Representative: Sugrañes Patentes y Marcas

(56) References cited:
- WO-A1-96/22028
- WO-A1-2008/001591
- US-A- 3 036 338
- US-A1- 2002 106 461
- US-A1- 2007 254 070
- US-B1- 6 264 989

## Description

### Technical Field of the invention

The invention relates to a process and to an apparatus for incorporating additives to feeds, such additives being medicinal materials, by the application of a mixture comprising medicinal material and an adjuvant compound on the surface of the feed.

### Background of the Invention

Animal feed is usually provided in the form of pellets, which can be obtained in several ways, the most conventional way being that of cutting longitudinal portions from an agglomerated mixture of food materials such as cereals, oils, proteins and other components which is extruded through a circular nozzle . These pellets have a general cylindrical shape the size of which varies according to their components and their purpose.

Although it was common to incorporate additives to the food mixture, such additives being medicinal materials, before the extrusion stage, this way of proceeding is being substituted with processes in which said additives are incorporated to the pellets once finished, for the purpose of preventing the contamination of the installation downstream from the mixer in which the medicinal materials are mixed with the food mixture. Indeed, the main drawback of this manufacturing method is that the installation needs to be completely cleaned after the production of a manufacturing batch or lot to eliminate the traces of medicinal material and to reduce the risk of contaminating therewith said batches or lots of feed produced subsequently.

For the purpose of solving this drawback, several process proposals are known in which the medicinal material, such as, for example, a premixture of several pharmacological substances, is applied on the surface of the pellet once finished.

Document US 2007/254070 describes a process to obtain a mixture comprising medicinal products suitable for being applied over finished feed pellets.

Documents US 6264989 and WO 2008/001591 describe alternative processes to obtain mixtures comprising medicinal products to be used as additives.

Document EP 0806900 describes a batch process for incorporating added ingredients to an animal feed in the form of pellets, especially suitable for incorporating medicinal material. The process comprises the stages of putting an amount said pellets in a mixer; adding to said mixer a cohesive gel containing said added ingredient; and mixing said gel with said pellets such that they are substantially homogenously coated with said gel.

According to the inventor, by means of this process it is achieved that the mixer walls are free from contamination with the added ingredient after the mixing.

As for the gel, for its preparation, all the ingredients under dry conditions are combined in a mixer until obtaining a granulated or powdered medicinal premixture, which is subsequently introduced in a vessel in which water and an adjuvant compound are added. Once the product is suspended and the gel is sufficiently hydrated, it is ready to coat the food pellets.

This process has, however, certain drawbacks, including the fact that the amount of water needed is too high for the formation of the gel and that the vessel in which the gel which is subsequently metered onto the pellets is prepared and accumulated, as well as the conduits for the transport towards the mixer inside which the gel is applied on the pellets, are contaminated with medicinal material.

An object of the invention is a process which solves the mentioned drawbacks as well as an apparatus for putting it into practice, which even further reduce the contamination of the installations and which need less water consumption for the manufacture of the coated pellets.

Another object of the present invention is to disclose a process and an apparatus by means of which it is assured that the material with additives which covers the feed finally obtained remains on the surface of the pellet during its transport and use.

### Disclosure of the Invention

The process for incorporating additives to feeds according to claim 1 is essentially characterised in that the mixture comprising medicinal material and an adjuvant compound is continuously produced immediately before its application on the feed, and in that said mixture is obtained by suspension in the air of the medicinal material, in the form of powder or granulate, and the liquid adjuvant compound, in the form of droplets or mist.

According to the invention, the mixture intended to be applied on the feed is produced as it is applied on such feed, whereby amounts of mixture ready for its application on the product are scarcely accumulated, the need to use tanks for the preparation and accumulation of the emulsion or mixture being eliminated.

Advantageously, according to the process of the invention, the amount of water per volume of mixture ready for its application is significantly reduced.

According to the invention, the medicinal material is introduced into a suction chamber housing a rotating impeller which aspirates the medicinal material, stirs it and causes its suspension in the air, the suction chamber being provided with a lower outlet for said suspension.

According to the invention, the liquid adjuvant compound is introduced into the suction chamber, a suspended mixture of medicinal material and adjuvant compound being obtained therein.

According to another variant, the adjuvant compound is dispersed with the suspension of the medicinal material at the outlet of the suction chamber.

In one embodiment, the mixture is forced to pass through a sieve or the like, suitable for the particles of medicinal material larger than a predetermined size to be ground before the application thereof on the surface of the feed.

The sieving operation causes the grinding of the granules larger than a predetermined particle size contained in the medicinal material, which favours their subsequent permanence on the surface of the feed.

According to one way of proceeding, the application of the medicinal material mixed with the adjuvant compound on the surface of the feed is carried out by allowing the feed, in the form of pellets, to fall by gravity according to a cylindrical curtain, from the centre of which the recently prepared mixture of said medicinal material and of the adjuvant compound is cast onto the feed by centrifugation.

The centrifugation of the sieved mixture is preferably performed by means of a centrifuging disc rotating at a speed comprised between 3,000 and 4,000 revolutions per minute (rpm).

According to another aspect of the invention, an apparatus for the application of medicinal materials mixed with an adjuvant compound in feeds in the form of pellets is disclosed according to claim 8.

The apparatus comprises means for forming a cylindrical curtain of feed and a coaxial centrifuging disc, arranged below the lower outlet of the suction chamber and inside the mentioned cylindrical curtain of feed, suitable for casting the mixture produced by centrifugation against said cylindrical curtain of feed.

According to another feature, the impeller and the centrifuging disc are arranged integral with a common vertical rotation shaft, driven by also common driving means.

The common vertical rotation shaft rotates at a speed comprised between 3,000 and 4,000 revolutions per minute (rpm).

In a different embodiment, the means for dispersing the liquid adjuvant compound in the suspension of medicinal material to produce the mixture comprise an inlet or access to the suction chamber for the liquid adjuvant compound, at a level above the rotating impeller, such that the mixture is produced inside the suction chamber.

According to another feature, the suction chamber comprises a hollow vertical body which is essentially cylindrical and provided on its walls with narrow through openings determining a sieve, inside which the rotating impeller is arranged, such that the suspended mixture of medicinal material and of adjuvant compound is propelled by the rotating impeller towards the narrow through openings of the sieve, wherein the particles of medicinal material larger than a predetermined size are ground.

It is contemplated that the impeller is provided in its perimeter with grinding means formed by a vertical wall with a notched configuration.

In another embodiment variant, the means for dispersing the liquid adjuvant compound in the suspension of medicinal material suspension to produce the mixture comprise an inlet or access to the suction chamber for the liquid adjuvant compound, the suction chamber comprising means for collecting the mixture provided with at least one side opening through which the sieved mixture is expelled, which is communicated with the inside of a mixer.

### Brief Description of the Drawings

The attached drawings illustrate different variants of an apparatus according to the invention. Specifically:
Figure 1 is a schematic sectional view of the suction chamber and the centrifuging disc of an apparatus according to a first variant of the invention;
Figure 2 is a side view of the hollow vertical body arranged in the suction chamber of the apparatus according to the first variant of the invention.
Figures 3a and 3b are respective elevational and plan views of the rotating impeller of the suction chamber, also of the apparatus according to the first embodiment variant;
Figure 4 is a diagram of part of an installation for the manufacture of feeds according to a variant of the process of the invention;
Figure 5 is a schematic view of an apparatus according to the invention according to a second embodiment variant;
Figure 6 is a schematic view of an apparatus according to the invention according to a third embodiment variant; and
Figure 7 is a schematic sectional view of an apparatus to carry out the process according to the invention.

### Detailed Description of the Drawings

The process for incorporating additives to feeds, such additives being medicinal materials, by the application of a mixture comprising medicinal material and an adjuvant compound on the surface of the feed, comprises the operation of continuously producing said mixture immediately before its application on the feed.

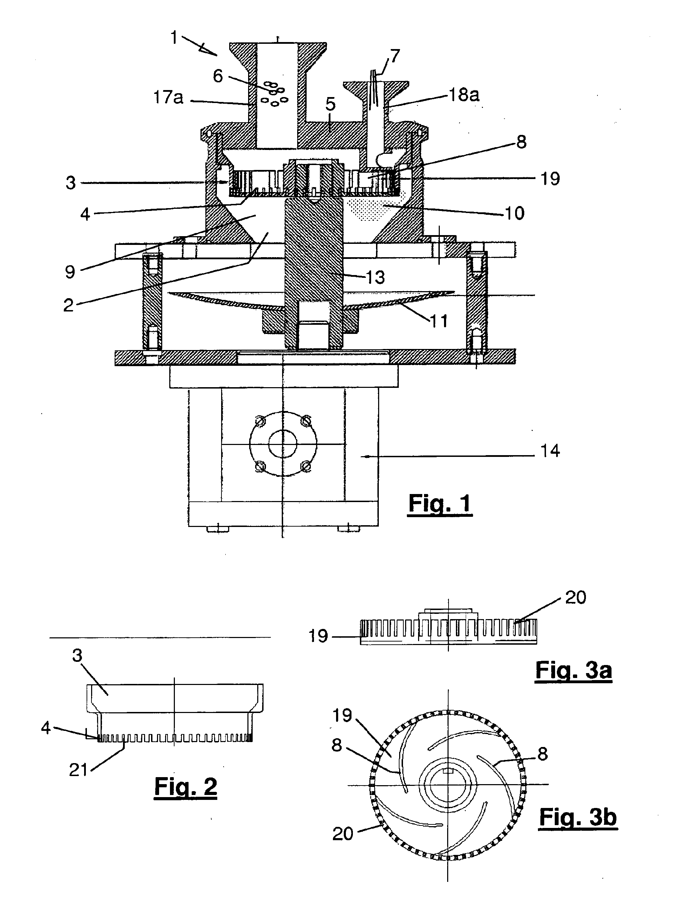

According to a first variant of the invention, an apparatus 1 such as the one partially depicted in Figure 1, is used for continuously obtaining said mixture and for its subsequent application on the feed.

Said apparatus 1 comprises a suction chamber 9 inside which there is arranged an essentially cylindrical hollow vertical body 3 provided on its walls with narrow through openings 21 determining a sieve 4. In the example of Figure 2, through openings 21 are formed by notches made in the lower edge of the mentioned hollow vertical body 3.

Inside said hollow vertical body 3 there is coaxially arranged tightly a rotating impeller 19 provided with blades 8 (see Figure 3b), which vertically extend from the base of the impeller 19, and on its perimeter, with grinding means 20 formed in the example of Figures 3a and 3b, by a vertical wall with a notched configuration.

The suction chamber 9 is provided with respective inlets for receiving therein, through its base or upper cover 5 and separately, the medicinal material 6 and the adjuvant compound 7. It is observed in Figure 1 that the inlet for the adjuvant compound 7, serving as means for dispersing the liquid adjuvant compound in the suspension of medicinal material, is formed by the mouth of the feeding conduit 18a of said adjuvant compound 7, being suitable for directing said compound in a direction transverse to the shaft of the impeller 919.

When the particles of medicinal material 6 and the liquid of adjuvant compound 7 are aspirated and introduced into the suction chamber 9, they are instantaneously mixed by the effect of the blades 8 of the impeller 19 and the obtained suspension in the air is propelled towards grinding means 20 and the narrow through openings 21 of the sieve 4, wherein the particles of medicinal material larger than a predetermined size are ground and forced to pass through the sieve 4.

The subsequent application of the sieved mixture 10 on the surface of the feed is preferably carried out by allowing the feed, in the form of pellets, to fall by gravity according to a cylindrical curtain, from the centre of which the recently prepared sieved mixture 10 is cast onto the feed by centrifugation.

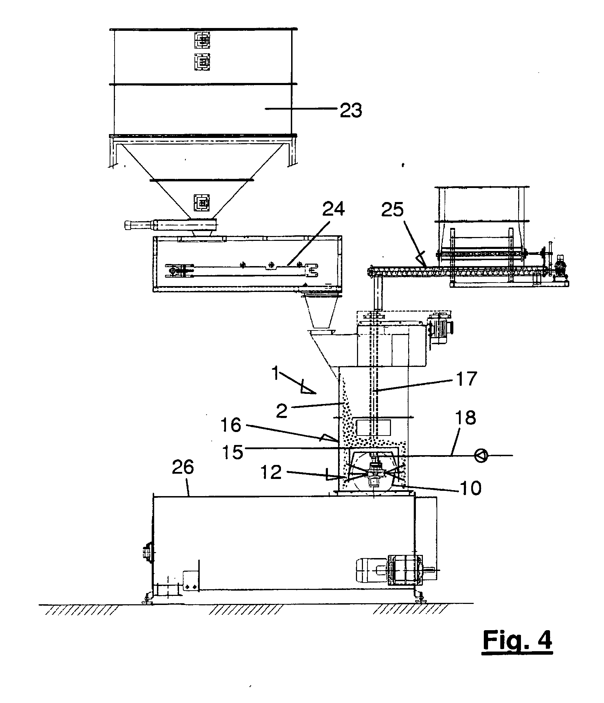

For this purpose, the suction chamber 9 is provided with a lower outlet 2, through which the sieved mixture 10 is discharged onto a vertically adjacent coaxial centrifuging disc 11 below the adjacent suction chamber 9, suitable for receiving on its upper face the sieved mixture 10 and casting it by centrifugation against the feed, not depicted in this Figure 1, which falls by gravity in the form of an enveloping curtain (see Figure 4).

It is shown that the impeller 19 and the centrifuging disc 11 are arranged integral with a common vertical rotation shaft 13 driven by also common driving means 14. Said common vertical rotation shaft 13 rotates at a speed comprised between 3,000 and 4,000 revolutions per minute (rpm).

The diagram of Figure 4 depicts the apparatus 1 showing, in addition to the suction chamber 9 and the centrifuging disc 11 explained in detail and depicted in Figure 1, distribution means 16 for distributing the feed, in the form of pellets 2, according to a vertical cylindrical curtain 12. Said distribution means 16 comprise, in a known manner, a rotating disc 15 onto which the pellets 2 are discharged, which pellets are distributed by centrifugation inside a cylindrical retaining chamber. The dispersion of the sieved mixture 10 from the inside of the formed curtain of pellets 2 is observed in this Figure 4.

Figure 4 further shows, upstream of the apparatus 1, the hopper 23 storing the feed in the form of pellets and the weighing belt 24 for regulating the flow of pellets which is discharged in the apparatus 1; and the dispensing means 25 for dispensing a medicinal premixture in the form of particles of medicinal material, which are discharged by gravity into the mixture chamber 9, and means for feeding the adjuvant compound 7, comprising a propelling group. The feeding conduits 17 and 18 of the medicinal material 6 and of the adjuvant compound 7, respectively, are communicated in the example of Figure 1 with the mouths of the feeding conduits 17a and 18a integrated in the suction chamber 9. Although it is not depicted, providing the installation with suitable means for subjecting the medicinal material, in the form of powder or granulate, to a prior grinding operation for reducing its grain size to a value of less than 100 microns, and preferably comprised between 50 and 100 microns, before said medicinal material is introduced into the suction chamber 9 and, in the variant of Figure 1, into the vertical hollow body 3, is contemplated.

Downstream of the apparatus 1, from which the pellets already coated with the sieved mixture 10 exit, there is arranged a conventional blade mixer 26, prior to the final dispensing of the finished product for its storage and/or transport to the animal breeding farms. Nevertheless, it is provided that the apparatus 1 carries out the last operation in the production of the feed, such that the feed dispensed at the outlet of the apparatus 1 is directly discharged into the feed transport containers without passing through a mixer or being temporarily stored while waiting to be loaded into the transport trucks. According to this way of proceeding, the feed would be coated with the mixture continuously and immediately before being discharged into the transport trucks.

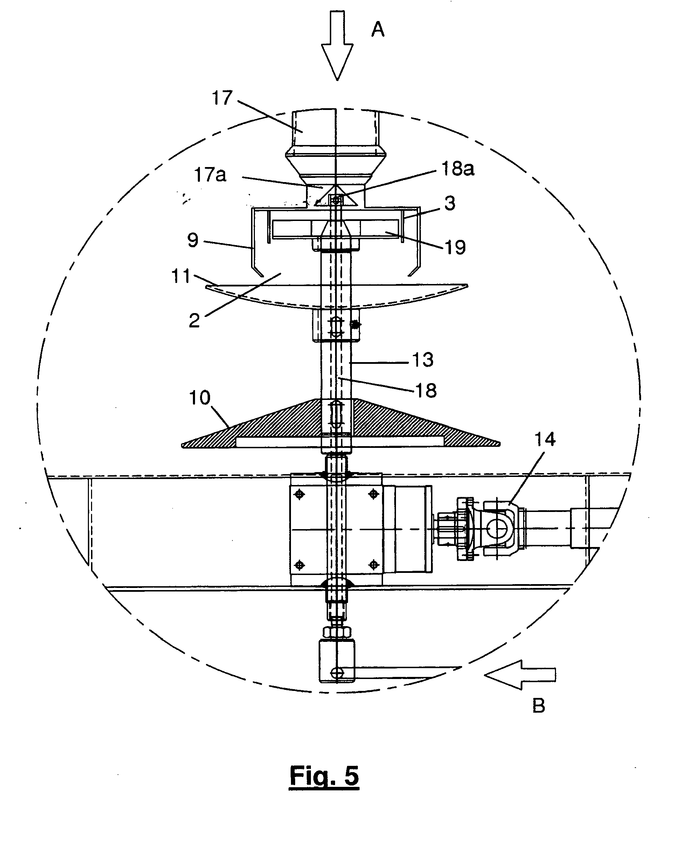

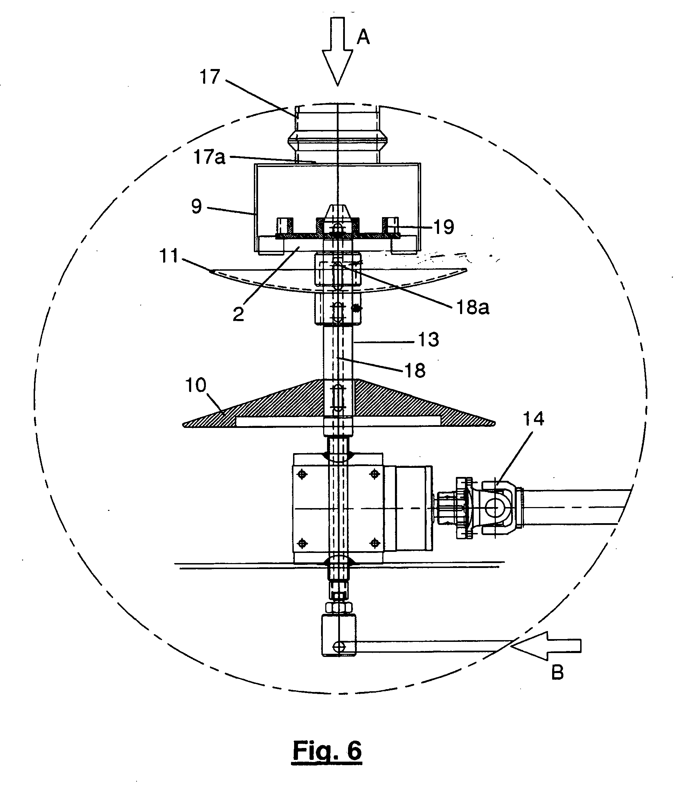

Figures 5 and 6 depict alternative variants of the apparatus according to the invention.

According to the embodiment of Figure 5, the medicinal material 6 is still introduced continuously into the suction chamber 9 through a respective mouth of the suction conduit 17a, but unlike the variant of Figure 1, the feeding conduit 18 of the adjuvant compound 7 does not traverse the cover 5 of the suction chamber 9. Indeed, it is observed in Figure 5 that the feeding conduit 17 of the medicinal material 6 has a significantly higher capacity than in the variant of Figure 1, and that the driving shaft 13 of the centrifuging disc 11 and of the impeller 19 is hollow, such that the adjuvant compound 7 is transported through its inside towards the suction chamber 9, the mouth of the feeding conduit 18a being located at a level above the impeller 19, centred with respect to the mouth of the feeding conduit 17a of the medicinal material 6. In this Figure 5, letter A designates the inlet of the apparatus 1 for the medicinal material 6 and the letter B designates the place through which the adjuvant compound 7 is introduced inside the shaft 13.

Despite the differences existing with respect to the first variant of the invention, in this second embodiment variant the mixture is still produced continuously in the suction chamber 9.

In the apparatus 1 of Figure 6, which depicts a third embodiment variant the mixture is no longer produced in the suction chamber 9. Although the impeller 19 still causes a suspension of medicinal material 6 in the air, the latter is not in contacted with the adjuvant compound 7 until the suspension exits the suction chamber 9 through its lower outlet 2. It is observed in Figure 6 that the adjuvant compound 7, which is transported through the inside of the driving shaft 13 of the centrifuging disc 11 and the impeller 19, is expelled or dispersed in the air through the mouth of the feeding conduit 18a at a point provided at a level above the centrifuging disc 11 and below the lower outlet 2 of the suction chamber 9.

It is further worth mentioning that in this third embodiment variant the apparatus 1 lacks the hollow vertical body 3, and thus any sieve, for the purpose of eliminating components subjected to a great wear, which is an improvement in the maintenance of the installation. The appropriate variant of the apparatus 1 should be selected according to the dimensions of apparatus 1, conditioned by the volume of desired product to be obtained, and the characteristics of the medicinal material (specifically its size and mechanical properties).

In the variants of Figures 5 and 6 it is observed that apparatus 1 is provided with a protective dispersion plate 10, which protects the bottom of the retaining chamber for the curtain of pellets from the drip or from the particles of mixture which would be deposited therein, redirecting them by centrifugation on the curtain of pellets. This dispersion plate 10 is integral with the driving shaft 13 of the impeller 19 and of the centrifuging disc 11.

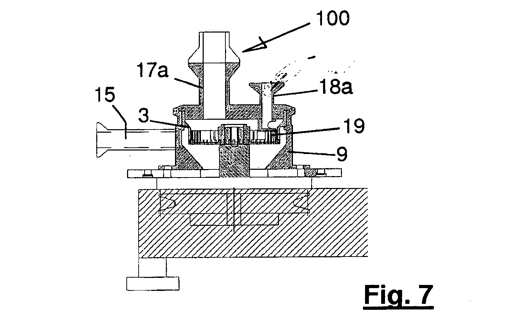

In a fourth alternative of the invention, as depicted in Figure 7, an apparatus 100, lacking the centrifuging disc 11, which comprises means for collecting the sieved mixture 10 which surround the suction chamber 9, the outlet for the suspended mixture being formed in this case by at least one side opening 15 through which the sieved mixture 10 is expelled, which is intended to be communicated with the inside of a mixer, not depicted, in which the sieved mixture 10 will be spread on the pellets.

## Claims

1. A process for incorporating additives to feeds, such additives being medicinal materials, by the application of a mixture comprising medicinal material and an adjuvant compound on the surface of the feed, said mixture being obtained by the suspension in the air of the medicinal material, in the form of powder or granulate, and the liquid adjuvant compound, in the form of droplets or mist, the process being **characterised in that** medicinal material is continuously introduced into a suction chamber housing a rotating impeller which aspirates the medicinal material, stirs it and causes the cited suspension in the air, the suction chamber being provided with a lower outlet through which the suspended medicinal material leaves the chamber, and **in that** the mixture is continuously produced and as it is obtained the mixture is immediately applied on the feed.

2. The process according to claim 1, **characterised in that** the liquid adjuvant compound is introduced into the suction chamber, a suspended mixture of medicinal material and adjuvant compound being obtained therein.

3. The process according to claim 1, **characterised in that** the adjuvant compound is dispersed with the suspension of the medicinal material at the outlet of the suction chamber.

4. The process according to any one of claims 1 to 3, **characterised in that** the mixture is forced to pass through a sieve or the like, suitable for the particles of medicinal material larger than a predetermined size to be ground before the application thereof on the surface of the feed.

5. The process according to anyone of the previous claims, **characterised in that** the application of the medicinal material mixed with the adjuvant compound on the surface of the feed is carried out by allowing the feed, in the form of pellets, to fall by gravity according to a cylindrical curtain, from the centre of which the recently prepared mixture of said medicinal material and of the adjuvant compound is cast onto the feed by centrifugation.

6. The process according to the previous claim, **characterised in that** the suction camber is inside the enveloping curtain of feed.

7. The process according to the previous claims, **characterised in that** the centrifugation of the sieved mixture is performed by means of a centrifuging disc rotating at a speed comprised between 3,000 and 4,000 revolutions per minute (rpm).

8. An apparatus (1) for the application of a mixture of medicinal materials (6) and an adjuvant compound (7) in feeds, in the form of pellets (2), **characterised in that** it comprises
- a suction chamber (9), provided with an inlet for the medicinal material, housing a rotating impeller (19) which aspirates the medicinal material, stirs it and causes its suspension in the air, the suction chamber being provided with a lower
outlet (2) for the suspension,
- means for dispersing the liquid adjuvant compound in the suspension of medicinal material to produce the mixture,
- distribution means (16) for forming a cylindrical curtain (12) of feed, and
- a coaxial centrifuging disc (11), arranged below the outlet (2) of the suction chamber (9) and inside the said cylindrical curtain (12) of feed, suitable for casting the continuous produced mixture by centrifugation against said cylindrical curtain (12) of feed.

9. The apparatus (1) according to claim 8, **characterised in that** the suction chamber (9) is arranged inside the said cylindrical curtain (12) of feed.

10. The apparatus (1) according to claims 8 or 9, **characterised in that** the impeller (19) and the centrifuging disc (11) are arranged integral with a common vertical rotation shaft (13), driven by also common driving means (14).

11. The apparatus (1) according to the previous claim, **characterised in that** the common vertical rotation shaft (13) rotates at a speed comprised between 3,000 and 4,000 revolutions per minute (rpm).

12. The apparatus (1) according to any of claims 8 to 11, **characterised in that** the means for dispersing the liquid adjuvant compound in the suspension of medicinal material to produce the mixture comprise an inlet or access to the suction chamber (9) for the liquid adjuvant compound (7), at a level above the rotating impeller (19), such that the mixture is produced inside the suction chamber.

13. The apparatus (1) according to the previous claim, **characterised in that** the suction chamber (9) comprises a hollow vertical body (3) which is essentially cylindrical and provided on its walls with narrow through openings determining a sieve (4), inside which the rotating impeller (19) is arranged, such that the suspended mixture of medicinal material and of adjuvant compound is propelled by the rotating impeller towards the narrow through openings of the sieve, wherein the particles of medicinal material larger than a predetermined size are ground.

14. The apparatus (1) according to any one of claims 8 to 13, **characterised in that** the impeller (19) is provided in its perimeter with grinding means formed by a vertical wall (20) with a notched configuration.

15. Use of a method according to any of claims 1 to 7 for the manufacture of feeds, **characterised in that** the feed with additives obtained is directly discharged into the feed transport containers.

## Patentansprüche

1. Verfahren zur Zugabe von Additiven in Futtermittel, wobei die genannten Additive medikamentöse Stoffe sind, durch die Anwendung einer Mischung umfassend einen medikamentösen Stoff und einen Hilfsstoff auf die Oberfläche des Futtermittels, wobei die genannte Mischung durch die Suspension in Luft des medikamentösen Stoffes, in Form von Pulver oder Granulat, und des flüssigen Hilfsstoffes, in Form von Tröpfchen oder Nebel, erhalten wird, wobei das Verfahren **dadurch gekennzeichnet ist, dass** der medikamentöse Stoff durchgehend in eine Saugkammer eingeführt wird, welche ein rotierendes Laufrad aufnimmt, das den medikamentösen Stoff einzieht, diesen rührt und die genannte Suspension in Luft verursacht, wobei die Saugkammer mit einem unteren Ausgang versehen ist, durch welchen der medikamentöse Stoff in Suspension die Kammer verlässt, und dass die Mischung durchgehend hergestellt wird und gleichzeitig mit dem Erhalten derselben, die Mischung unmittelbar auf das Futtermittel angewendet wird.

2. Verfahren nach Anspruch 1, **dadurch gekennzeichnet, dass** der flüssige Hilfsstoff in die Saugkammer eingeführt wird, wobei in seinem Inneren eine Mischung in Suspension des medikamentösen Stoffes und Hilfsstoffes erhalten wird.

3. Verfahren nach Anspruch 1, **dadurch gekennzeichnet, dass** der Hilfsstoff mit der Suspension des medikamentösen Stoffes am Ausgang der Saugkammer dispergiert wird.

4. Verfahren nach einem der Ansprüche 1 bis 3, **dadurch gekennzeichnet, dass** die Mischung durch ein Sieb oder ähnliches gezwungen wird, das geeignet ist, die Partikeln des medikamentösen Stoffes, die größer als eine vorbestimmte Größe sind, vor der Anwendung derselben auf die Oberfläche des Futtermittels zu mahlen.

5. Verfahren nach einem der vorhergehenden Ansprüche, **dadurch gekennzeichnet, dass** die Anwendung des mit dem Hilfsstoff gemischten medikamentösen Stoffes auf die Oberfläche des Futtermittels durchgeführt wird, indem das Futtermittel, in Form von Pellets, durch die Schwerkraft gemäß einem zylindrischen Vorhang fällt, wobei von dem Mittelpunkt desselben die frisch vorbereitete Mischung von dem genannten medikamentösen Stoff und von dem Hilfsstoff über das Futtermittel durch Zentrifugierung geworfen wird.

6. Verfahren nach dem vorhergehenden Anspruch, **dadurch gekennzeichnet, dass** die Saugkammer sich innerhalb des umhüllenden Vorhangs von Futtermittel befindet.

7. Verfahren nach den vorhergehenden Ansprüchen, **dadurch gekennzeichnet, dass** die Zentrifugierung der durchsiebten Mischung mit einer rotierenden Scheibe durchgeführt wird, welche mit einer Geschwindigkeit zwischen 3.000 und 4.000 Umdrehungen pro Minute (U/min) rotiert.

8. Vorrichtung (1) für die Anwendung einer Mischung von medikamentösen Stoffen (6) und einem Hilfsstoff (7) in Futtermittel, in Form von Pellets (2), **dadurch gekennzeichnet, dass** sie Folgendes umfasst
- eine Saugkammer (9), welche mit einem Eingang für den medikamentösen Stoff versehen ist, welche ein rotierendes Laufrad (19) aufnimmt, das den medikamentösen Stoff einzieht, diesen rührt und seine Suspension in Luft verursacht, wobei die Saugkammer mit einem unteren Ausgang (2) für die Suspension versehen ist,
- Mittel für die Dispersion des flüssigen Hilfsstoffes in der Suspension des medikamentösen Stoffes, um die Mischung herzustellen,
- Verteilungsmittel (16) zur Ausbildung eines zylindrischen Vorhangs (12) aus Futtermittel, und
- eine koaxiale Zentrifugierungsscheibe (11), welche unter dem Ausgang (2) der Saugkammer (9) und innerhalb des genannten zylindrischen Vorhangs (12) aus Futtermittel angeordnet ist, welche geeignet ist, um die durchgehend hergestellte Mischung durch Zentrifugierung gegen den genannten zylindrischen Vorhang (12) aus Futtermittel zu werfen.

9. Vorrichtung (1) nach Anspruch 8, **dadurch gekennzeichnet, dass** die Saugkammer (9) innerhalb des genannten zylindrischen Vorhangs (12) aus Futtermittel angeordnet ist.

10. Vorrichtung (1) nach Anspruch 8 oder 9, **dadurch gekennzeichnet, dass** das Laufrad (19) und die Zentrifugierungsscheibe (11) einstückig mit einer gemeinsamen vertikalen Rotationswelle (13) angeordnet sind, welche ebenso mit gemeinsamen Antriebsmitteln (14) angetrieben wird.

11. Vorrichtung (1) nach dem vorhergehenden Anspruch, **dadurch gekennzeichnet, dass** die gemeinsame vertikale Rotationswelle (13) mit einer Geschwindigkeit zwischen 3.000 und 4.000 Umdrehungen pro Minute (U/min) rotiert.

12. Vorrichtung (1) nach einem der Ansprüche 8 bis 11, **dadurch gekennzeichnet, dass** die Mittel für die Dispersion des flüssigen Hilfsstoffes in der Suspension des medikamentösen Stoffes für die Herstellung der Mischung einen Eingang oder Zugang zur Saugkammer (9) für den flüssigen Hilfsstoff (7), bei einer über das rotierende Laufrad (19) liegenden Höhe, umfassen, so dass die Mischung innerhalb der Saugkammer hergestellt wird.

13. Vorrichtung (1) nach dem vorhergehenden Anspruch, **dadurch gekennzeichnet, dass** die Saugkammer (9) einen hohlen vertikalen Körper (3) umfasst, welcher wesentlich zylindrisch ist und an seinen Wänden mit engen, ein Sieb (4) bestimmenden Durchgangsöffnungen versehen ist, in welchem das rotierende Laufrad (19) angeordnet ist, so dass die Mischung in Suspension des medikamentösem Stoffes und des Hilfsstoffes von dem rotierenden Laufrad zu den engen Durchgangsöffnungen des Siebs getrieben wird, wobei die Partikeln des medikamentösen Stoffes, die größer als eine vorbestimmte Größe sind, gemahlen werden.

14. Vorrichtung (1) nach einem der Ansprüche 8 bis 13, **dadurch gekennzeichnet, dass** das Laufrad (19) in seinem Umfang mit Mahlmitteln versehen ist, welche aus einer vertikalen Wand (20) mit einer eingekerbten Ausbildung gebildet sind.

15. Anwendung von einem Verfahren nach einem der Ansprüche 1 bis 7 für die Herstellung von Futtermitteln, **dadurch gekennzeichnet, dass** das erhaltene Futtermittel mit Additiven direkt in die Futtermitteltransportbehälter ausgeladen wird.

## Revendications

1. Procédé pour incorporer des additifs à des aliments, lesdits additifs étant des matières médicinales, par l'application d'un mélange comprenant une matière médicinale et un composé adjuvant sur la surface de l'aliment, ledit mélange étant obtenu par la suspension dans l'air de la matière médicinale, sous forme de poudre ou de granulés, et le composé adjuvant liquide, sous forme de gouttes ou de brume, le procédé étant **caractérisé en ce que** la matière médicinale est introduite en continu dans une chambre de succion logeant un propulseur rotatif qui aspire la matière médicinale, la brasse et cause ladite suspension dans l'air, la chambre de succion étant pourvue d'une sortie inférieure à travers laquelle la matière médicinale suspendue sorte de la chambre, et **en ce que** le mélange es produit en continu et au fur et à mesure que l'on obtient le mélange, il est immédiatement appliqué sur l'aliment.

2. Procédé selon la revendication 1, **caractérisé en ce que** le composé adjuvant liquide est introduit à l'intérieur de la chambre de succion, un mélange suspendu de matière médicinale et de composé adjuvant étant obtenu en son sein.

3. Procédé selon la revendication 1, **caractérisé en ce que** le composé adjuvant est dispersé avec la suspension de la matière médicinale à la sortie de la chambre de succion.

4. Procédé selon l'une quelconque des revendications 1 à 3, **caractérisé en ce que** le mélange est forcé à passer à travers un tamis ou analogue, approprié pour que les particules de matière médicinale plus grandes qu'une taille prédéterminée soient broyées avant leur application sur la surface de l'aliment.

5. Procédé selon l'une quelconque des revendications précédentes, **caractérisé en ce que** l'application de la matière médicinale mélangée avec le composé adjuvant sur la surface de l'aliment est menée à terme en faisant que l'aliment, sous forme de croquettes, tombe par gravité selon un rideau cylindrique, à partir du centre duquel le mélange préparé récemment de ladite matière médicinale et du composé adjuvant est coulé sur l'aliment par centrifugation.

6. Procédé selon la revendication précédente, **caractérisé en ce que** la chambre de succion est à l'intérieur du rideau enveloppant d'aliment.

7. Procédé selon les revendications précédentes, **caractérisé en ce que** la centrifugation du mélange tamisé est réalisée par le biais d'un disque de centrifugation qui tourne à une vitesse comprise entre 3000 et 4000 tours par minute (tpm).

8. Dispositif (1) pour l'application d'un mélange de matières médicinales (6) et un composé adjuvant (7) dans des aliments sous forme de croquettes (2), **caractérisé en ce qu'**il comprend :
- une chambre de succion (9), pourvue d'une entrée de matière médicinale, qui loge un propulseur rotatif (19) qui aspire la matière médicinale, la brasse et cause sa suspension dans l'air, la chambre de succion étant pourvue d'une sortie inférieure (2) pour la suspension,
- des moyens pour disperser le composé adjuvant liquide dans la suspension de matière médicinale pour produire le mélange,
- des moyens de distribution (16) pour former un rideau cylindrique (12) d'aliment, et
- un disque de centrifugation coaxial (11), disposé sous la sortie (2) de la chambre de succion (9) et à l'intérieur dudit rideau cylindrique (12) d'aliment, approprié pour couler le mélange produit en continu par centrifugation contre ledit rideau cylindrique (12) d'aliment.

9. Dispositif (1) selon la revendication 8, **caractérisé en ce que** la chambre de succion (9) est disposée à l'intérieur dudit rideau cylindrique (12) d'aliment.

10. Dispositif (1) selon les revendications 8 ou 9, **caractérisé en ce que** le propulseur (19) et le disque de centrifugation (11) sont disposés solidaires à un arbre de rotation vertical commun (13), entraîné par des moyens d'entraînement (14) également communs.

11. Dispositif (1) selon la revendication précédente, **caractérisé en ce que** l'arbre de rotation vertical commun (13) tourne à une vitesse comprise entre 3000 et 4000 tours par minute (tpm).

12. Dispositif (1) selon l'une quelconque des revendication 8 à 11, **caractérisé en ce que** les moyens pour disperser le composé adjuvant liquide dans la suspension de matière médicinale pour produire le mélange comprennent une entrée ou accès à la chambre de succion (9) pour le composé adjuvant liquide (7), à un niveau au-dessus du propulseur rotatif (19), de manière que le mélange soit produit au sein de la chambre de succion.

13. Dispositif (1) selon la revendication précédente, **caractérisé en ce que** la chambre de succion (9) comprend un corps vertical creux (3) qui est essentiellement cylindrique et pourvu sur ses parois d'ouvertures traversantes étroites déterminant un tamis (4), à l'intérieur duquel le propulseur rotatif (19) est disposé, de manière que le mélange suspendu de matière médicinale et de composé adjuvant soit propulsé par le propulseur rotatif vers les ouvertures traversantes étroites du tamis, dans lequel les particules de matière médicinale plus grandes qu'une taille prédéterminée sont broyées.

14. Dispositif (1) selon l'une quelconque des revendications 8 a 13, **caractérisé en ce que** le propulseur (19) est pourvu dans son périmètre de moyens de broyage formés par une paroi verticale (20) avec une configuration crénelée.

15. Utilisation d'un procédé selon l'une quelconque des revendications 1 à 7 pour la fabrication d'aliments, **caractérisé en ce que** l'aliment avec des additifs obtenu est directement déchargé dans les conteneurs de transport d'aliment.
